# EUROPEAN PATENT APPLICATION

(11) **EP 3 029 166 A1**
(43) Date of publication of application: **08.06.2016**
(21) Application number: 14831593.0
(22) Date of filing: 18.07.2014
(51) Int. Cl.: C22B 19/30, B09B 3/00, C22B 7/02, C22B 9/02, C22B 19/20, C25C 1/16

(54) **METHOD FOR RECOVERING ZINC FROM ELECTRIC-FURNACE STEELMAKING DUST AND DEVICE FOR RECOVERING ZINC FROM ELECTRIC-FURNACE STEELMAKING DUST**

(30) Priority: 30.07.2013 JP 2013157305
(71) Applicant: Tohoku University, Sendai-shi, Miyagi 980-8577 (JP)
(72) Inventor: NAGASAKA Tetsuya, Sendai-shi Miyagi 980-8577 (JP); MATSUBAE-YOKOYAMA Kazuyo, Sendai-shi Miyagi 980-8577 (JP)
(74) Representative: Plougmann Vingtoft a/s
(86) International application number: PCT/JP2014/069184
(87) International publication number: WO 2015/016086

(57) **Abstract**

A method and a device for recovering zinc from electric furnace steelmaking dust, which are capable of recovering high-purity metal zinc for relatively short time. A Ca mixing and heating means obtains ZnO and 2CaO·Fe₂O₃ by mixing electric furnace steelmaking dust with calcium compound and performing heat treatment in a non-reducing atmosphere at not lower than 960°C and not exceeding 1100°C for one to three hours. An iron powder mixing means mixes the ZnO and 2CaO·Fe₂O₃ with iron powder, and compact the mixture. A reduction and volatilization means obtains a solid metal zinc piece by disposing a green compact in a decompression container 21, decompressing and heating the inside of the decompression container to generate zinc vapor, and cooling and coagulating the zinc vapor. A zinc acquisition means acquires lumpy zinc by immersing the metal zinc piece in a NaCl-KCl based multi-component chloride flux and cooling the flux solution.

## Description

### Field

The present invention relates to a method for recovering zinc from electric furnace steelmaking dust and a device for recovering zinc from electric furnace steelmaking dust.

### Background

About 30% of crude steel production in Japan is performed by remelting and smelting steel scrap using an electric furnace. Zinc on the surface of a galvanized steel sheet is conventionally volatized and reoxidized during melting of the scrap, and recovered as collected dust. The amount of dust generated in the whole of Japan is 15 kg/ton steel, that is, as much as 500 thousand to 600 thousand tons approximately per year. With the increase of plated steel sheet scrap for vehicles, the amount of dust tends to increase. The dust is generally consisted of ZnFe₂O₄, ZnO, and the like, which are mainly oxide of iron and/or zinc. Thus it is important how efficiently ZnO is separated from Fe₂O₃ to recover zinc, which are exhaustible scarce resource, and iron.

Currently, the main method employed both inside and outside Japan as electric furnace dust processing is the Waelz method (see Patent Literature 1, for example). In the Waelz method, using a rotary kiln, electric furnace dust is heated to about 1300°C by a heavy oil burner after adding carbon materials thereto so as to reduce zinc oxide and volatize zinc as vapor once. However, the generated zinc vapor is reoxidized by CO₂ in an atmosphere, and thus zinc is eventually recovered as crude zinc oxide and supplied to zinc-smelting manufactures. Meanwhile, the residue after extracting zinc is discharged to the outside of the furnace, and one part of the residue is recycled as electric furnace materials as clinker, while the major part thereof is processed as roadbed materials, cement materials, or landfilling materials. Recently, the residue has been often stored in electric furnace steel makers or Waelz kiln companies.

As described above, in the Waelz method, zinc originally in an oxide form is reduced to be a metal form once using a large amount of energy, but it is returned to the oxide form eventually. As a result, the zinc oxide in dust is simply separated and concentrated, causing a problem that the efficiency is considerably low from the viewpoint of energy effective use. Moreover, iron components recovered by the Waelz method are low-purity iron oxide, and the reuse rate of iron is also considerably low. Therefore, there has been desired a high-technique effective use employing a new idea not depending on the conventional method, such as conversion into value added iron oxide while reducing input energy.

In order to solve the above-described problem, the present inventors propose the method in which dust with calcium oxide not less than double of the molar amount of iron in the dust added thereto, is kept in air at not lower than 900°C and not exceeding 1000°C for not shorter than 60 hours and not exceeding 120 hours, whereby zinc ferrite ZnFe₂O₄ that is a zinc compound as main component in the dust is converted into zinc oxide ZnO and dicalcium ferrite 2CaO·Fe₂O₃, as shown in the equation (1), and the generated ZnO and 2CaO·Fe₂O₃ are magnetically separated from each other by a high magnetic field gradient using a difference in magnetic characteristics between both (see Patent Literature 2, for example).
[Chemical equation 1]

ZnFe₂O₄(s) + 2CaO(s) → ZnO(s) + Ca₂Fe₂O₅(s) (1)

### Prior Arts List

### Patent Literature

Patent Literature 1: Japanese Patent Application Laid-open No. H9-268332
Patent Literature 2: Japanese Patent Application Laid-open No.2009-30121

### Summary of the invention

### Problems to be solved by the invention

In the method described in Patent Literature 2, it is possible to separate zinc oxide more efficiently than the Waelz method and provide an additional value to iron oxide. However, zinc is recovered as zinc oxide, and there has been desired the development of a method for recovering metal zinc from electric furnace steelmaking dust.
Moreover, the method described in Patent Literature 2 has the problem that the heating time when heating electric furnace steelmaking dust with calcium oxide added thereto is 60 hours or longer, which is excessively long.

The present invention has been made in view of such a problem, and aims at providing a method for recovering zinc from electric furnace steelmaking dust and a device for recovering zinc from electric furnace steelmaking dust, which are capable of recovering high-purity metal zinc for relatively short time.

### Solution to Problem

The present inventors has achieved the present invention after conducting an experiment in which electric furnace steelmaking dust is subjected to heat treatment in a non-reducing atmosphere after adding lime thereto and finding that although the volatilization amount of iron and zinc is small regardless of whether CaO is added or not, the major part of any of halogens such as chlorine and fluorine and heavy metal which has high vapor pressure, such as lead and cadmium, is volatilized and removed, and that the concentration of halogens, lead, and cadmium after heat treatment at 1100°C, in particularly, is equal to lower than the analytical limit.

That is, a method for recovering zinc from electric furnace steelmaking dust according to the present invention includes a Ca mixing and heating step for obtaining ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours [see the Chemical equation (2)], a iron powder mixing step for mixing the ZnO and 2CaO·Fe₂O₃ obtained by the Ca mixing and heating step with iron powder of a molar amount not less than the equivalent amount of the molar amount of the ZnO, and compacting the mixture, a reduction and volatilization step for obtaining a solid zinc piece by disposing a green compact by the iron powder mixing step in a decompression container, decompressing and heating the inside of the decompression container to generate zinc vapor [see the Chemical equation (3)], and cooling and coagulating the zinc vapor, and a zinc acquisition step for acquiring lumpy zinc by immersion the zinc piece obtained by the reduction and volatilization step in an NaCl-KCl based multi-component chloride flux having a melting point lower than the melting point of zinc and cooling the solution.
[Chemical equation 2]

ZnFe₂O₄(s) + 2CaO(s) → ZnO(s) + Ca₂Fe₂O₅(s) (2)

ZnO(s) + F e (s) → Z n (g) + F e O(s) (3)

A device for recovering zinc from electric furnace steelmaking dust according to the present invention includes a Ca mixing and heating means configured to obtain ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours [see the Chemical equation (2)], an iron powder mixing means configured to mix the ZnO and 2CaO·Fe₂O₃ obtained by the Ca mixing and heating means with iron powder of the molar amount not less than the equivalent amount of the molar amount of the ZnO, and compact the mixture, a reduction and volatilization means that includes a decompression container and is configured to obtain a solid zinc piece by disposing a green compact by the iron powder mixing means in the decompression container, decompressing and heating the inside of the decompression container to generate zinc vapor [see the Chemical equation (3)], and cooling and coagulating the zinc vapor, and a zinc acquisition means configured to acquire lumpy zinc by immersion the zinc piece obtained by the reduction and volatilization means in an NaCl-KCl based multi-component chloride flux having a melting point lower than the melting point of zinc and cooling the flux solution.

In the method for recovering zinc from electric furnace steelmaking dust and the device for recovering zinc from electric furnace steelmaking dust according to the present invention, when electric furnace steelmaking dust is mixed with calcium compound containing Ca of a molar amount not less than an equivalent amount of the molar amount of Fe in the electric furnace steelmaking dust, and heat treatment is performed in a non-reducing atmosphere at not lower than 960°C and not exceeding 1100°C for one to three hours, it is possible to substantially volatilize and remove halogens such as chlorine and fluorine and heavy metal which has high vapor pressure, such as lead and cadmium, contained in the electric furnace steelmaking dust while hardly volatilizing iron and zinc. Moreover, with the addition of calcium compound, ZnO and 2CaO·Fe₂O₃ can be obtained by the reaction of the Chemical equation (2) while preventing generation of hardly-reducible and hardly-soluble ZnFe₂O₄. The heat treatment time is within three hours, which is relatively short, and thus the whole processing for recovering zinc can be performed for short time. Although the method described in Patent Literature 2 can be also used as the Ca mixing and heating step, the heat treatment time becomes as long as 60 hours or longer. The calcium compound to be mixed is quick lime (CaO), lime stones (CaCO₃), or slaked lime (Ca(OH)₂), for example. Moreover, when calcium ferrite (2CaO·Fe₂O₃) is melted, an unexpected phenomenon occurs. Thus, even when the heating temperature is higher than 1100°C, it is preferably maintained equal to or lower than a melting point of calcium ferrite (about 1230°C) so that the calcium ferrite is not melted.

The obtained ZnO and 2CaO·Fe₂O₃ is reduced after mixing iron powder thereto, whereby zinc vapor is obtained in accordance with the Chemical equation (3), and the zinc vapor is cooled and coagulated to obtain a metal zinc piece. The heat treatment is performed with addition of calcium compound before reduction, and thus the zinc piece in which halogens or heavy metal such as lead is free can be obtained. As the iron powder to be mixed, electrolytic iron powder or turnings (that are one type of iron scrap and cutting chips of carbon steel) can be used, for example. Moreover, the heating temperature for generating zinc vapor may be a boiling point of zinc or higher at reduced pressure.

The recovered metal zinc piece is immersed in NaCl-KCl based multi-component chloride flux for flux processing, whereby an oxide layer on the surface of the zinc piece can be removed, and lumpy and high-purity metal zinc can be recovered. Moreover, 2CaO·Fe₂O₃ that is the residue after reducing zinc can be recovered as it is and used as a dephosphorization agent in a steelmaking process or an iron source in a blast furnace ironmaking process.

In such a manner, the method for recovering zinc from electric furnace steelmaking dust and the device for recovering zinc from electric furnace steelmaking dust according to the present invention can efficiently separate zinc oxide in electric furnace steelmaking dust as oxide without reducing the zinc oxide, and recover metal zinc. Furthermore, the iron oxide in the electric furnace steelmaking dust can be recovered as 2CaO·Fe₂O₃ that becomes a dephosphorization agent in the steelmaking process or an iron source in the blast furnace ironmaking process, allowing the electric furnace steelmaking dust to be recycled almost completely. Moreover, it is also possible to considerably reduce the processing cost of the electric furnace steelmaking dust and input energy.

Furthermore, the method for recovering zinc from electric furnace steelmaking dust according to the present invention may include a Ca mixing and heating step for obtaining ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours, a leaching step for immersing the ZnO and 2CaO·Fe₂O₃ obtained by the Ca mixing and heating step in an alkali or neutral aqueous solution to selectively leach the ZnO in the aqueous solution, and a electrowinning step for electrolizing the aqueous solution in which the ZnO is leached by the leaching step so that zinc is deposited on a cathode.

The device for recovering zinc from electric furnace steelmaking dust according to the present invention may include a Ca mixing and heating means configured to obtain ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours, a leaching means configured to immerse the ZnO and 2CaO·Fe₂O₃ obtained by the Ca mixing and heating means in an alkali or neutral aqueous solution to selectively leach the ZnO in the aqueous solution, and an electrowinning means configured to electrolize the aqueous solution in which the ZnO is leached by the leaching means so that zinc is deposited on a cathode.

In these cases, ZnO and 2CaO·Fe₂O₃ obtained by heat treatment with addition of calcium compound are immersed in an alkali or neutral aqueous solution, whereby ZnO can be selectively leached in the aqueous solution while hardly immersing 2CaO·Fe₂O₃ in the aqueous solution. Thus, 2CaO·Fe₂O₃ can be recovered as residues and used as a dephosphorizing agent in the steelmaking process or an iron source in the blast furnace method. Moreover, the aqueous solution in which ZnO is leached is electrolyzed so that zinc is deposited on a cathode, whereby high-purity metal zinc can be recovered.

In the leaching step in the method for recovering zinc from electric furnace steelmaking dust according to the present invention, it is preferable that the ZnO and 2CaO·Fe₂O₃ obtained by the Ca mixing and heating step is immersed in the aqueous solution at not lower than 70°C and not exceeding 100°C. Moreover, it is preferable that the aqueous solution in the leaching step is a NaOH solution or a NH₄Cl solution. In the device for recovering zinc from electric furnace steelmaking dust according to the present invention, it is preferable that the leaching means is configured to immerse the ZnO and 2CaO·Fe₂O₃ obtained by the Ca mixing and heating means in the solution at not lower than 70°C and not exceeding 100°C. Moreover, it is preferable that the aqueous solution in the leaching means is a NaOH solution or a NH₄Cl solution. In these cases, all zinc can be efficiently leached into the solution. Advantageous Effects of Invention

According to the present invention, it is possible to provide a method for recovering zinc from electric furnace steelmaking dust and a device for recovering zinc from electric furnace steelmaking dust, which are capable of recovering high-purity metal zinc for relatively short time.

### Brief Description of Drawings

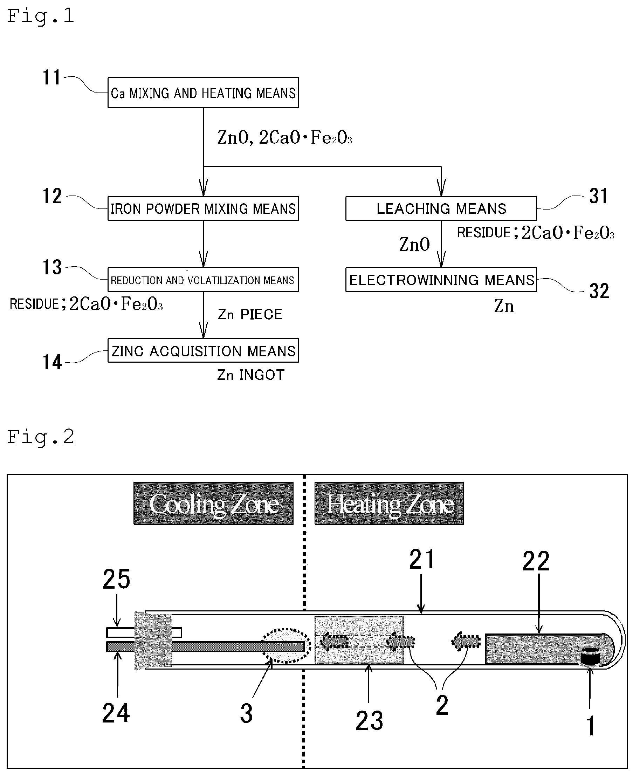

FIG. 1 is a block configuration diagram illustrating a device for recovering zinc from electric furnace steelmaking dust according to an embodiment of the present invention.
FIG. 2 is a side view illustrating a reduction and volatilization means of the device for recovering zinc from electric furnace steelmaking dust illustrated in FIG. 1.

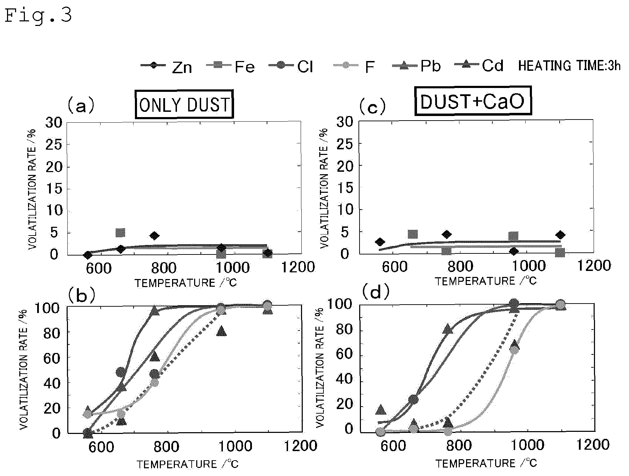

FIG. 3 is graphs illustrating, regarding a method for recovering zinc from electric furnace steelmaking dust according to an embodiment of the present invention, (a) a volatilization rate of zinc and iron and (b) a volatilization rate of chlorine, fluorine, lead, and cadmium when only electric furnace steelmaking dust is heated, and (c) a volatilization rate of zinc and iron and (d) a volatilization rate of chlorine, fluorine, lead, and cadmium when the electric furnace steelmaking dust is heated after adding CaO thereto.

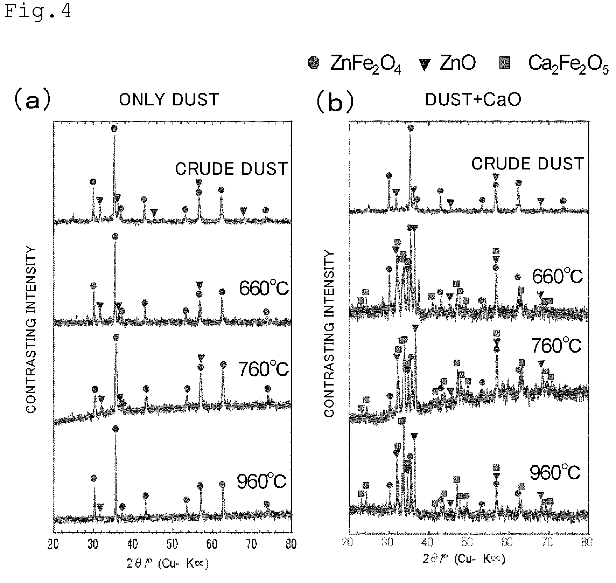

FIG. 4 illustrates, regarding the method for recovering zinc from electric furnace steelmaking dust according to the embodiment of the present invention, X-ray diffraction patterns of the dust after heat treatment, (a) when only the electric furnace steelmaking dust is heated and (b) when the electric furnace steelmaking dust is heated after adding CaO thereto.

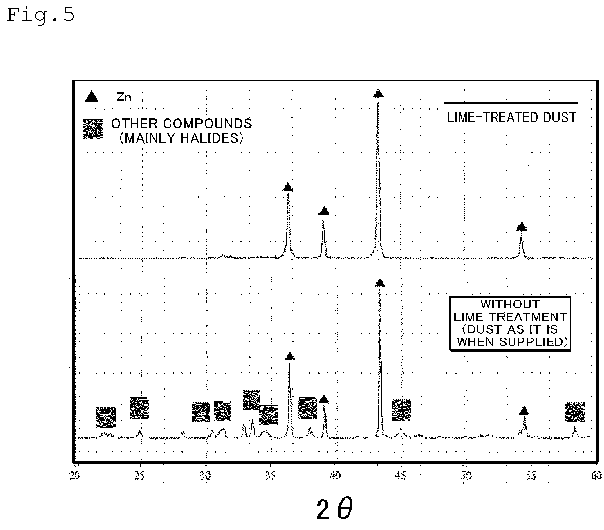

FIG. 5 illustrates, regarding the method for recovering zinc from electric furnace steelmaking dust according to the embodiment of the present invention, X-ray diffraction patterns of the dust when reduction and volatilization are performed by adding iron powder to electric furnace steelmaking dust heated with addition of CaO thereto (lime-treated dust) and when reduction and volatilization are performed by adding iron powder to electric furnace steelmaking dust heated solely (without lime treatment).

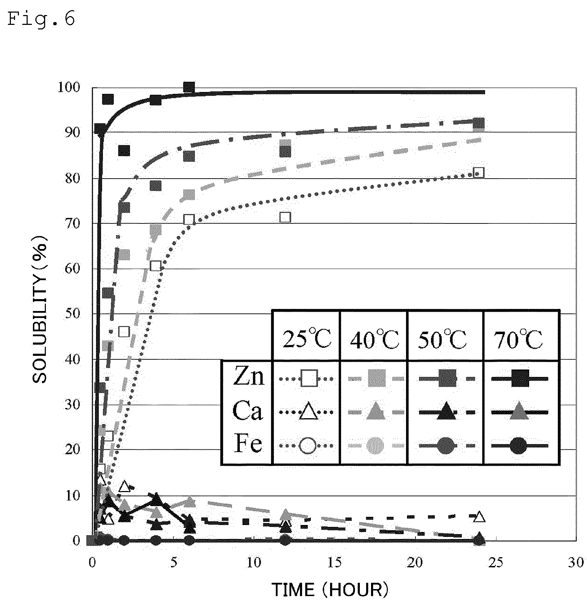

FIG. 6 is a graph illustrating, regarding the method for recovering zinc from electric furnace steelmaking dust according to the embodiment of the present invention, a change with time of the immersed amount of zinc, calcium, and iron when the electric furnace steelmaking dust heated after adding CaO thereto is immersed in an aqueous NaOH solution.

### Description of Embodiments

In the following, an embodiment of the present invention will be described with reference to the enclosed drawings.

FIG. 1 to FIG. 6 illustrate a method for recovering zinc from electric furnace steelmaking dust and a device for recovering zinc from electric furnace steelmaking dust according to the embodiment of the present invention.

As illustrated in FIG. 1, the device for recovering zinc from electric furnace steelmaking dust according to the embodiment of the present invention includes a Ca mixing and heating means 11, an iron powder mixing means 12, a reduction and volatilization means 13, and a zinc acquisition means 14.

As illustrated in FIG. 1, the Ca mixing and heating means 11 includes a mixing container and a heating device. The Ca mixing and heating means 11 is configured to mix electric furnace steelmaking dust and calcium compound containing Ca of a molar amount not less than an equivalent amount of the molar amount of Fe in the electric furnace steelmaking dust in the mixing container and perform, using the heating device, heat treatment in a non-reducing atmosphere at not lower than 960°C and not exceeding 1100 °C for one to three hours. In this manner, the Ca mixing and heating means 11 can acquire ZnO and 2CaO·Fe₂O₃ by reaction of the Chemical equation (2). Note that the calcium compound to be mixed is quick lime(CaO), lime stones (CaCO₃), or slaked lime (Ca(OH)₂), for example.

The iron powder mixing means 12 includes a powder compacting device. The iron powder mixing means 12 is configured to mix ZnO and 2CaO·Fe₂O₃ obtained by the Ca mixing and heating means 11 with iron powder of a molar amount not less than an equivalent amount of the molar amount of ZnO and compact the mixture using the powder compacting device. Note that the iron powder to be mixed is electrolytic iron powder or turnings, for example.

As illustrated in FIG. 2, the reduction and volatilization means 13 includes a heat-resistant decompression container 21, a sample holding container 22 provided at one end of the decompression container 21, a heat insulating pipe 23 provided in the middle part of the decompression container 21, a low-temperature condensation pipe 24 extended from the other end of the decompression container 21 to the vicinity of the heat insulating pipe 23, and an exhaust pipe 25 provided at the other end of the decompression container 21. The reduction and volatilization means 13 is divided to a heating zone on one end side relative to the heat insulating pipe 23 and a cooling zone on the other end side relative to the heat insulating pipe 23. In the reduction and volatilization means 13, a green compact 1 by the iron powder mixing means 12 is disposed in the sample holding container 22 in the heating zone, and then air is discharged from the exhaust pipe 25 to decompress the inside of the decompression container 21 while heating the inside of the sample holding container 22 to 1000°C or higher. Thus, zinc vapor 2 is generated in accordance with the equation (3), and the zinc vapor 2 is introduced to the cooling zone through the heat insulating pipe 23 to be cooled and coagulated on the surface of the low-temperature condensation pipe 24, whereby a solid metal zinc piece 3 can be obtained.

As illustrated in FIG. 1, the zinc acquisition means 14 includes an immersion container. The zinc acquisition means 14 is configured to acquire lumpy zinc by introducing NaCl-KCl based multi-component chloride flux having a melting point lower than the melting point of zinc to the immersion container, immersion the zinc piece obtained by the reduction and volatilization means 13 in the multi-component chloridic flux in the immersion container, and then cooling the flux solution.

In the following, the method for recovering zinc from electric furnace steelmaking dust according to the embodiment of the present invention will be described with reference to experimental results and the like. The method for recovering zinc from electric furnace steelmaking dust according to the embodiment of the present invention is performed preferably by the device for recovering zinc from electric furnace steelmaking dust according to the embodiment of the present invention. In the method for recovering zinc from electric furnace steelmaking dust according to the embodiment of the present invention, the Ca mixing and heating means 11 first mixes electric furnace steelmaking dust and calcium compound containing Ca of a molar amount not less than an equivalent amount of the molar amount of Fe in the electric furnace steelmaking dust, and performs heat treatment in a non-reducing atmosphere at not lower than 960°C and not exceeding 1100°C for one to three hours.

### [Heating test when calcium compound is added to electric furnace steelmaking dust]

Regarding the case in which an equivalent amount of quick lime (CaO) is added to the electric furnace steelmaking dust shown in Table 1 and the mixture is heated for three hours, the relation between the holding temperature and the volatilization volume of zinc (Zn), iron (Fe), chlorine (Cl), fluorine (F), lead (Pb), and cadmium (Cd) was investigated. The result is illustrated in FIGS. 3(c) and 3(d). For comparison, the same test was performed also regarding the case in which quick lime (CaO) is not added, and the result is illustrated in FIGS. 3(a) and 3(b).

**[Table 1]**

| Fe | Si | Zn | Cu | Ni | Cr | Na | K | Mg | Ca | Cl | Pb | F | Cd |
|---|---|---|---|---|---|---|---|---|---|---|---|---|---|
| 35.8 | 2.16 | 22.7 | 0.12 | 0.02 | 1.24 | 0.61 | 0.83 | 0.93 | 2.92 | 4.70 | 1.44 | 0.80 | 0.01 |

| | | | | | | | | | | | | | |
|---|---|---|---|---|---|---|---|---|---|---|---|---|---|
| (unit mass%) | | | | | | | | | | | | | |

As illustrated in FIG. 3, it was confirmed that the volatilization volume of iron and zinc is small regardless of whether CaO is added or not, while the major part of any of halogens such as chlorine and fluorine and heavy metal which has high vapor pressure, such as lead and cadmium, is volatilized and removed. It was confirmed that the volatilization and removal rate thereof is high particularly at a heating temperature of 960°C or higher, and the concentration of halogens, lead, and cadmium after heat treatment at 1100°C is equal to or lower than the analytical limit. Moreover, the removal rate thereof was 80% or higher with heating time of even one hour. Even when the heating temperature was higher than 1100°C, the effect was not changed from the case with 1100°C. Therefore, the heating temperature of 1100°C, at maximum, is sufficient. Even when the heating time is longer than three hours, the effect was not changed from the case with three hours. Therefore, the heating time of three hours, at maximum, is sufficient.

Moreover, it was confirmed that when CaO is added, the volatilization and removal of halogens, lead, and cadmium does not progress unless the temperature is higher than the case where CaO is not added. However, when the dust is heated without adding CaO thereto, ZnO, which occupies 30 to 40% of zinc in the dust, reacts with Fe₂O₃ in the dust to be converted into hardly-reducible and hardly-soluble ZnFe₂O₄ by the equation (4). Thus, the addition of CaO is necessary to prevent generation of ZnFe₂O₄.
[Chemical equation 3]

ZnO(s) + Fe₂O₃(s) → ZnFe₂O₄(s) (4)

In order to confirm this, the X-ray diffraction patterns of the dust after heat treatment were investigated. The result is shown in FIG. 4. As illustrated in FIG. 4(b), it was confirmed that when CaO is added to dust, the diffraction intensity of ZnFe₂O₄ in the dust becomes smaller and the diffraction intensity of ZnO becomes larger as the treatment temperature is increased. By contrast, as illustrated in FIG. 4(a), it was confirmed, in the case of dust without addition of CaO thereto, that the diffraction intensity of ZnFe₂O₄ becomes larger as the treatment temperature is increased, and the existence ratio of ZnO becomes remarkably low at 960°C, on the contrary.

Furthermore, when the dust is heated without adding CaO thereto, the major part of ZnCl₂, which generally occupies about 10% in zinc contained in the dust, is volatilized, and the loss of zinc cannot be avoided. By contrast, it is experimentally demonstrated that the volatilization loss of zinc is hardly occurred by adding CaO, and the addition of CaO is advantageous also from the viewpoint of the yield of zinc.

In this test, CaO was used as calcium compound. However, it can be easily assumed, from the Chemical equations (5) and (6) based on the dissociation temperature or dissociation vapor pressure of thermodynamics, and experimentally confirmed that the same effects can be obtained also in the case where lime stones (CaCO₃) or slaked lime (Ca(OH)₂) is used.
[Chemical equation 4]

CaCO₃(s) → CaO(s) + CO₂(g) (5)

Ca(OH)₂(s) → CaO(s) + H₂O(g) (6)

Based on the above-described test result, when electric furnace steelmaking dust is mixed with calcium compound containing Ca of a molar amount not less than an equivalent amount of the molar amount of Fe in the electric furnace steelmaking dust, and heat treatment is performed in a non-reducing atmosphere at not lower than 960°C and not exceeding 1100°C for one to three hours, it is possible to substantially volatilize and remove halogens such as chlorine and fluorine and heavy metal which has high vapor pressure, such as lead and cadmium, contained in the electric furnace steelmaking dust while hardly volatilizing iron and zinc. Moreover, with the addition of calcium compound, ZnO and 2CaO·Fe₂O₃ can be obtained while preventing generation of hardly-reducible and hardly-soluble ZnFe₂O₄. The heat treatment time is within three hours, which is relatively short, and thus the whole processing for recovering zinc can be performed for short time.

Next, the iron powder mixing means 12 mixes ZnO and 2CaO·Fe₂O₃ obtained by the Ca mixing and heating means 11 with iron powder of a molar amount not less than an equivalent amount of the molar amount of ZnO and compacts the mixture. Such a green compact 1 is disposed in the decompression container 21, and the reduction and volatilization means 13 decompresses the inside of the decompression container 21 while heating it to 1000°C or higher so as to generate zinc vapor 2. Then, the zinc vapor 2 is cooled and coagulated to obtain the solid metal zinc piece 3. The metal zinc piece 3 is flake-shaped or granular-shaped.

### [Zinc reduction test after addition of iron powder]

There was prepared a dust sample heated in air at 1100°C for three hours after adding thereto CaO not less than the iron concentration in electric furnace steelmaking dust, and electrolytic iron powder was added to the dust sample so that the molar ratio of ZnO/Fe becomes 1, and mixed and compacted to be set in the sample holding container 22 of the reduction and volatilization means 13 in FIG. 2. Thereafter, the sample holding container 22 was maintained at 1000°C for about one hour while decompressing the inside of the decompression container 21 by a vacuum pump, and zinc vapor generated in accordance with the Chemical equation (3) was condensed on the surface of the low-temperature condensation pipe 24 provided in the cooling zone. The zinc in the dust was all reduced and volatilized within one hour, and the residue after the test was only 2CaO·Fe₂O₃. For comparison, the same test in which metal iron powder is added was performed also regarding heat-treated dust without lime treatment.

The X-ray diffraction patterns of a zinc piece recovered from the surface of the low-temperature condensation pipe 24 is illustrated in FIG. 5. As illustrated in the lower graph of FIG. 5, when dust is directly iron-reduced and volatilized without performing lime treatment, volatile matters such as halogens in the dust are evaporated as well as zinc and deposited together with zinc. Thus, a large amount of peaks of chlorides and oxychlorides, other than metal zinc, were observed. Moreover, the deposit contains a few % of heavy metal such as lead, cadmium, and manganese, and the purity of zinc was 71%. Meanwhile, as illustrated in the upper graph of FIG. 5, in the deposit recovered from lime-treated dust, no peak of compound other than metal zinc was observed, and mixing of other metal was not observed. As a result of chemical analysis of a deposited zinc piece, the quality of zinc was limited to be about 95%. However, the mixing of heavy metal such as lead was not observed.

The same experiment was performed using turnings instead of electrolytic iron powder as reduction materials. Also in this case, zinc vapor can be generated in accordance with the Chemical equation (3). It was confirmed that the same result as the case of electrolytic iron powder is obtained by adding turnings of an equivalent amount of double of electrolytic iron powder in order to secure a contact area between iron and ZnO. However, it is clear that if the grain size of turnings is sufficiently small, an excessive addition amount can be less.

Based on the above-described test result, in the method for recovering metal zinc by reducing and volatilizing zinc oxide with metal iron, high-purity zinc cannot be obtained unless halogens, lead, and the like are removed preliminarily. That is, the iron reduction and volatilization method can recover metal zinc not mixed with halogens and heavy metal such as lead, in combination with the lime treatment. Note that 2CaO·Fe₂O₃ that is the residue after reducing zinc can be recovered as it is and used as a dephosphorizing agent in the steelmaking process or an iron source in the blast furnace ironmaking process.

The cause of deterioration of the quality of the metal zinc piece recovered by the reduction and volatilization means 13 is an oxide layer on the deposit surface, and the oxide (zinc oxide) is only and most important impurities. Thus, subsequently, in order to remove the oxide layer on the surface of the zinc piece, the zinc acquisition means 14 immerses the zinc piece obtained by the reduction and volatilization means 13 in NaCl-KCl based multi-component chloride flux having a melting point lower than the melting point of zinc. Thereafter, the flux is cooled, whereby lumpy zinc can be obtained.

### [Test for immersion zinc piece in flux]

A test for immersion zinc was performed using NaCl-KCl based multi-component chloride flux having a melting point lower than the melting point of Zn. Both the zinc piece and the flux were introduced in an alumina crucible and reimmersed at 450°C. The zinc piece, which was flake-shaped and granular-shaped with an oxidized surface before immersion, became a substantially fine ingot after flux dissolution. As a result of chemical analysis, the purity of zinc was 99% or higher.

Based on the test result, the recovered metal zinc piece is immersed in NaCl-KCl based multi-component chloride flux for carrying out on the flux processing, whereby the oxide layer on the surface of the zinc piece can be removed, and lumpy and high-purity metal zinc can be recovered.

In such a manner, the method for recovering zinc from electric furnace steelmaking dust and the device for recovering zinc from electric furnace steelmaking dust according to the embodiment of the present invention can efficiently separate zinc oxide in electric furnace steelmaking dust as oxide without reducing the zinc oxide, and recover metal zinc. Furthermore, the iron oxide in the electric furnace steelmaking dust can be recovered as 2CaO·Fe₂O₃ that becomes a dephosphorizing agent in the steelmaking process or an iron source in the blast furnace ironmaking process, allowing the electric furnace steelmaking dust to be recycled almost completely. Moreover, it is also possible to considerably reduce the processing cost of the electric furnace steelmaking dust and input energy.

As illustrated in FIG. 1, the device for recovering zinc from electric furnace steelmaking dust according to the embodiment of the present invention may include a leaching means 31 and an electrowinning means 32, instead of the iron powder mixing means 12, the reduction and volatilization means 13, and the zinc acquisition means 14. The leaching means 31 includes a leaching container. The leaching means 31 is configured to maintain an aqueous NaOH solution or an aqueous NH₄Cl solution at not lower than 70°C and not exceeding 100°C in the leaching container and immerse ZnO and 2CaO·Fe₂O₃ obtained by the Ca mixing and heating means 11 in the aqueous solution. Thus, the leaching means 31 selectively leaches ZnO in the aqueous solution. The electrowinning means 32 includes a lead alloy anode, an aluminum cathode, and a power source applying DC voltage between the anode and the cathode. The electrowinning means 32 is configured to dispose the anode and the cathode in a solution in which ZnO is leached by the leaching means 31, and apply DC voltage between the anode and the cathode using the power source to electrolyze the aqueous solution so that zinc can be deposited on the cathode.

In this case, in the method for recovering zinc from electric furnace steelmaking dust according to the embodiment of the present invention, the Ca mixing and heating means 11 converts zinc ferrite in the electric furnace steelmaking dust into zinc oxide that can be easily immersed both in acid and alkali. Thus, zinc in the dust can be leached entirely in the solution. Here, in order to use 2CaO·Fe₂O₃ that is the residue after recovering zinc as an ironmaking raw material or dephosphorizing flux, it is not preferable to dissolve 2CaO·Fe₂O₃ as well as zinc. For this reason, the dust is introduced not in acid solution but in an aqueous alkali NaOH solution or an aqueous neutral NH₄Cl solution in which 2CaO·Fe₂O₃ is not immersed basically. That is, ZnO and 2CaO·Fe₂O₃ obtained by the Ca mixing and heating means 11 are immersed in the NaOH solution or the NH₄Cl solution at not lower than 70°C and not exceeding 100°C to selectively leach ZnO in the solution.

### [ZnO leaching test]

1 g of electric furnace steelmaking dust lime-treated by the Ca mixing and heating means 11 was introduced to 300 ml of alkali 2M-NaOH solution to perform a test for investigating the influence of solution concentration and the influence of a temperature on the zinc leaching rate. The temperature of the aqueous solution was set to 25°C, 40°C, 50°C, and 70°C. The result of the leaching test is illustrated in FIG. 6. As illustrated in FIG. 6, it was confirmed that when the 2M-NaOH aqueous solution is maintained at 70°C, all zinc can be leached into the solution from the lime-treated dust in several hours. Moreover, it was also confirmed that 2CaO·Fe₂O₃ is hardly leached into the solution and can be recovered as residues. Note that the heating of the aqueous NaOH solution to higher than 100°C is not preferable from the viewpoint of input energy.

It was confirmed experimentally that all zinc in lime-treated dust can be leached also with an NH₄Cl solution instead of the aqueous NaOH solution. When the aqueous NH₄Cl solution is used, zinc leaching is occurred more rapidly than the case using the aqueous NaOH solution. However, the pH of the solution is close to neutral, and thus around 10% of 2CaO·Fe₂O₃ is leached into the solution. Thus, the aqueous NH₄Cl solution is slightly inferior to the aqueous NaOH solution from the viewpoint of the yield of 2CaO·Fe₂O₃.

Based on the above-described test result, ZnO and 2CaO·Fe₂O₃ obtained by heat treatment with addition of calcium compound are immersed in an alkali or neutral aqueous solution, whereby ZnO can be selectively leached in the aqueous solution while hardly immersion 2CaO·Fe₂O₃ in the aqueous solution. Thus, 2CaO·Fe₂O₃ can be recovered as residues and used as a dephosphorizing agent in the steelmaking process or an iron source in the blast furnace ironmaking process.

Next, the aqueous solution in which ZnO is leached by the leaching means 31 is electrolyzed by the electrowinning means 32. Thus, zinc can be deposited on the cathode, and high-quality metal zinc can be recovered. Reference Signs List

- 11: Ca mixing and heating means
- 12: iron powder mixing means
- 13: reduction and volatilization means
- 21: decompression container
- 22: sample holding container
- 23: heat insulating pipe
- 24: low-temperature condensation pipe
- 25: exhaust pipe
- 14: zinc acquisition means
- 1: green compact
- 2: zinc vapor
- 3: metal zinc piece
- 31: leaching means
- 32: electrowinning means

## Claims

1. A method for recovering zinc from electric furnace steelmaking dust, comprising:
a Ca mixing and heating step for obtaining ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours;
a iron powder mixing step for mixing the ZnO and 2CaO·Fe₂O₃ obtained by the said Ca mixing and heating step with iron powder of the molar amount not less than the equivalent amount of the molar amount of the said ZnO, and compacting the mixture;
a reduction and volatilization step for obtaining a solid zinc piece by disposing a green compact by the said iron powder mixing step in a decompression container, decompressing and heating an inside of the decompression container to generate zinc vapor, and cooling and coagulating the zinc vapor; and
a zinc acquisition step for acquiring lumpy zinc by immersing the zinc piece obtained by the said reduction and volatilization step in an NaCl-KCl based multi-component chloridic flux having a melting point lower than the melting point of zinc and cooling the flux solution.

2. A method for recovering zinc from electric furnace steelmaking dust, comprising:
a Ca mixing and heating step for obtaining ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours;
a leaching step for immersing the ZnO and 2CaO·Fe₂O₃ obtained by the said Ca mixing and heating step in an aqueous alkali or neutral solution to selectively leach the ZnO in the said solution; and
a electrowinning step for electrolizing the solution in which the ZnO is leached by the said leaching step so that zinc is deposited on a cathode.

3. The method for recovering zinc from electric furnace steelmaking dust according to claim 2, wherein, in the said leaching step, the ZnO and 2CaO·Fe₂O₃ obtained by the said Ca mixing and heating step is immersed in the said aqueous solution at not lower than 70°C and not exceeding 100°C.

4. The method for recovering zinc from electric furnace steelmaking dust according to claim 2 or 3, wherein the said aqueous solution in the said leaching step is an aqueous NaOH solution or an aqueous NH₄Cl solution.

5. The method for recovering zinc from electric furnace steelmaking dust according to any one of claims 1 to 4, wherein the said calcium compound is comprised at least one of quick lime, a lime stone, and slaked lime.

6. A device for recovering zinc from electric furnace steelmaking dust, comprising:
a Ca mixing and heating means configured to obtain ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours;
an iron powder mixing means configured to mix the ZnO and 2CaO·Fe₂O₃ obtained by the said Ca mixing and heating means with iron powder of the molar amount not less than the equivalent amount of the molar amount of the ZnO, and compact the mixture;
a reduction and volatilization means that includes a decompression container and is configured to obtain a solid zinc piece by disposing a green compact by the said iron powder mixing means in the said decompression container, decompressing and heating an inside of the said decompression container to generate zinc vapor, and cooling and coagulating the said zinc vapor; and
a zinc acquisition means configured to acquire lumpy zinc by immersing the zinc piece obtained by the said reduction and volatilization means in a NaCl-KCl based multi-component chloride flux having a melting point lower than the melting point of zinc and cooling the flux solution.

7. A device for recovering zinc from electric furnace steelmaking dust, comprising:
a Ca mixing and heating means configured to obtain ZnO and 2CaO·Fe₂O₃ by mixing electric furnace steelmaking dust with calcium compound containing Ca of a molar amount not less than an equivalent amount of the molar amount of Fe in the electric furnace steelmaking dust and performing heat treatment in a non-reducing atmosphere at not lower than 960°C and not exceeding 1100°C for one to three hours;
a leaching means configured to immerse the ZnO and 2CaO·Fe₂O₃ obtained by the said Ca mixing and heating means in an aqueous alkali or neutral solution to selectively leach the ZnO in the said solution; and
an electrowinning means configured to electrolize the said aqueous solution in which the ZnO is leached by the said leaching means so that zinc is deposited on a cathode.

8. The device for recovering zinc from electric furnace steelmaking dust according to claim 7, wherein, the said leaching means is configured to immerse the ZnO and 2CaO·Fe₂O₃ obtained by the Ca mixing and heating means in the said aqueous solution at not lower than 70°C and not exceeding 100°C.

9. The device for recovering zinc from electric furnace steelmaking dust according to claim 7 or 8, wherein the said aqueous solution in the leaching means is an aqueous NaOH solution or an aqueous NH₄Cl solution.

10. The device for recovering zinc from electric furnace steelmaking dust according to any one of claims 6 to 9, wherein the said calcium compound is comprised at least one of quick lime, a lime stone, and slaked lime.
